# EUROPÄISCHE PATENTSCHRIFT

(11) **EP 3 683 068 B1**
(45) Veröffentlichungstag und Bekanntmachung des Hinweises auf die Patenterteilung: **19.01.2022**
(21) Anmeldenummer: 19211871.9
(22) Anmeldetag: 27.11.2019
(51) Int. Cl.: B60C 5/10

(54) **RADSCHLAUCH**
WHEEL TUBE
TUBE DE ROUE

(30) Priorität: 18.01.2019 DE 202019100289 U; 18.01.2019 DE 202019100294 U
(43) Veröffentlichungstag der Anmeldung: 22.07.2020
(73) Patentinhaber: GAADI Bicycle Tube GmbH, 41189 Mönchengladbach (DE)
(72) Erfinder: Petrovan, Gabriel, 41178 Mönchengladbach (DE)
(74) Vertreter: Fabry, Bernd

(56) Entgegenhaltungen:
- WO-A2-2006/018012
- DE-A1-102011 100 562
- JP-A- 2017 047 703
- US-A1- 2007 125 470
- US-A1- 2016 114 628

## Beschreibung

### PRIORITÄTSANSPRUCH

Die vorliegende Europäische Patentanmeldung nimmt die Priorität der beiden Deutschen Gebrauchsmuster
DE20 2019 100 289.1 (18.01.2019)
DE20 2019 100 294.8 (18.01.2019)
in Anspruch.

### GEBIET DER ERFINDUNG

Die Erfindung befindet sich auf dem Fahrzeugsektor und betrifft einen Radschlauch, insbesondere einen Fahrradschlauch, zur Bespannung auf eine Felge.

### HINTERGRUND DER ERFINDUNG

Ein Fahrradschlauch ist ein Behältnis, gefüllt mit komprimierter Luft, das den Luftreifen (die Decke) von innen gegen Druckverlust abdichtet, wenn die Felge für schlauchlose Reifen nicht geeignet ist. Er ist Teil der Fahrradbereifung und besteht aus Butylkautschuk, früher auch aus Gummi.

Fahrradschläuche blicken auf eine lange Geschichte zurück: das erste Patent auf einen luftgefüllten Gummireifen wurde von DUNLOP bereits 1888 angemeldet, ein Jahr später folgte MICHELIN mit dem austauschbaren Luftschlauch für Fahrräder, die Vulkanisation von Kautschuk war zuvor schon 1839 von GOODYEAR erfunden worden. Seit der Zeit dieser Pioniere der Reifenentwicklung ist die Zeit nicht stehen geblieben, wie der umfangreiche Stand der Technik zeigt.

Zu den wichtigsten Entwicklungen der vergangenen Jahre zählen dabei Fahrradschläuche, die nicht in sich geschlossen sind, sondern über zwei Enden verfügen, die mit Kappen verschlossen sind. Diese neuen Typen von Fahrradschläuchen werden ebenfalls in die Decke eingelegt, wobei sie sich beim Aufpumpen ausdehnen und schließlich mit den Kappen aneinanderstoßen und die Decke ausfüllen.

In diesem Zusammenhang beobachtet man jedoch drei Probleme: zum einen kommt es durch Überdehnung zu Beschädigungen des Schlauchs und zwar in der Regel dort, wo der Schlauch auf der Felge aufliegt, des Weiteren weisen die Schläuche einen unruhigeren Lauf auf und schließlich kommt es häufig dazu, dass sie verdreht eingebaut werden, was natürlich auch zu Komplikationen führt.

### RELEVANTER STAND DER TECHNIK

Ein gattungsgemäßer Schlauch ist aus der JP 2017 047703 A bekannt. Dieses Dokument offenbart einen offenen Schlauch. Die Wandstärke des Schlauchendes, des Schlauchs selbst und des diese verbindenden Verbindungsteils kann einheitlich sein, kann aber auch teilweise variiert werden.

Das Deutsche Gebrauchsmuster DE29803621U1(GROMBALL) beschreibt einen Fahrradschlauch, der dadurch gekennzeichnet ist, dass der Schlauch offen ist, eine Überlappung hat, auf der Kleber ist und dieser durch eine Schutzfolie vor dem Austrocknen schützt. Auf der Gegenseite des offenen Schlauches befindet sich eine Fixierungsstelle ohne Kleber, sowie eine Klebestelle mit Schutzfolie, die diese vor dem Austrocknen schützt.

Die DE1684222U1(HERDEL) beschreibt eine aus einzelnen Schlauchgliedern bestehende Bereifung, bei der sich einzelne Schlauchglieder aneinander reihend um die Felge legen.

Das US-Patent US175,357betrifft Verbesserungen in den Schläuchen von pneumatischen Reifen, bei dem die Enden eines offenen Schlauches mit einer Fixierfläche über den gesamten Querschnitt der Berührungsflächen versehen sind. Aufgrund der hohen Materialdichte im Bereich der Berührungsflächen lässt sich ein entsprechender Schlauch nur schwer in einem Mantel gleichförmig mit Druckluft befüllen.

Gegenstand der DE3729670A1(CONTINENTAL) ist ein Schlauch mit lösbarer Endlosverbindung, bei dem ein mit einem Ventil ausgestatteter Schlauch von Luftbereifungen ein Schlauchende aufweist, das durch Einkrempeln gedoppelt ist, wobei die beiden offenen Schlauchenden ähnlich einer Muffenverbindung ineinander geschoben sind.

Die AT31915 B beschreibt einen geteilten Luftschlauch für Pneumatikreifen, bei dem die Enden des Schlauches nach Art eines Stecker/Kupplungsprinzips miteinander verbunden werden.

Die DE10032300A1(BRAND) beschreibt einen luftdichten aufpumpbaren Schlauch für Hartbereifungen, wobei nach dem Einziehen des Radschlauches unter den Radmantel in die erforderliche Position ein erstes Schlauchende in ein zweites Schlauchende eingeschoben wird.

Gegenstand der DE19817046A1(STEINBOCK) ist ein Fahrradschlauch, der nicht mehr in sich geschlossen ist, bei dem sich beim Einlegen in einen Fahrradmantel die Enden überlappen. Durch einen Klettverschluss werden die überlappenden Enden verbunden um ein Verrutschen der Überlappung zu verhindern. WO1997025215A1(JANNOCK) greift prinzipiell die gleiche Technik auf. Analoges Prinzip gilt auch für DE739848(JUKES), die ebenfalls schon 1943 einen Zweiendschlauch beschreibt.

Die DE737816(HÖLLE) beschreibt ebenfalls 1943 schon einen Zweiendschlauch für Fahrräder, bei dem die Abschlussstücke und seine beiden Ende aus einem dehnbareren Werkstoff als der übrige Schlauch gefertigt ist. Die Schlauchenden werden in einer Muffe zusammengeführt. Die sich bildende Kugelform verhindert das Einführen in die Muffe.

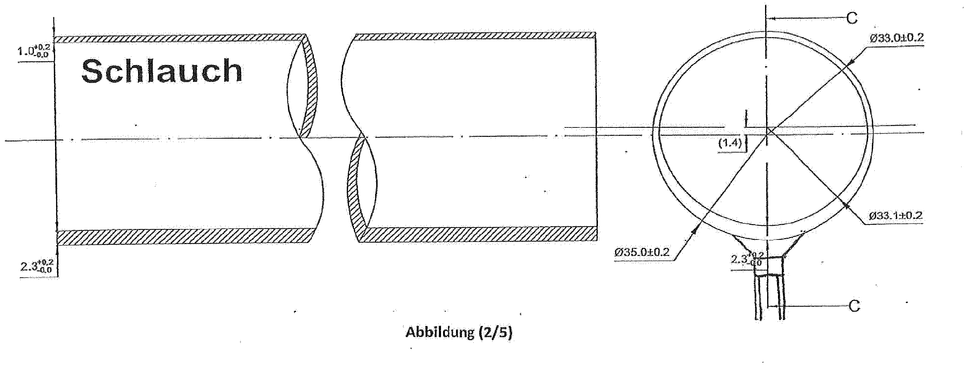

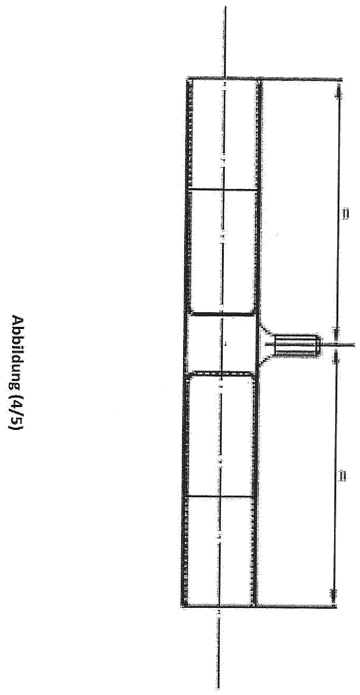

Die DE19828412A1(KIRPITCH) beschreibt einen Schlauch für einen Reifen und Rad. Der Schlauch für einen Reifen, insbesondere einen Fahrradreifen ist dadurch gekennzeichnet, dass der Schlauch zwei Endbereiche mit je einem geschlossenen Ende aufweist. Auch hier sollen sich die relativ spitzen Enden des Schlauches innerhalb des Mantels überlappen, wie aus der Figur 2b zu erkennen ist. In den Figuren 4a und 4b werden stumpfe Schlauchenden mit einer Klebeeinrichtung/Haltevorrichtung versehen.

Aus der US2008/0223497A1 (BALZOWSKI) ist der innere Schlauch eines Reifens bekannt, der ein erstes und ein zweites Ende aufweist, wobei diese Enden es erlauben sollen, den Schlauch ohne Ausbau des Reifens zu wechseln. Dieser Schlauch besteht entweder aus einer gebogenen oder geraden Röhre mit jeweils abgerundeten Endkappen, die an den offenen Enden der Röhre befestigt sind.

Die US2007 0125470A1 (GASTELLUM) betrifft einen Radschlauch, bei dem die beiden Enden durch Magnete zusammengehalten werden.

Gegenstand der US 2013 0075002A1 (VAN CLEAVE) ist ein Radschlauch mit zwei Enden und einem Ventil in der Mitte. Aus Abschnitt [0013] sowie Abbildung 2 geht jedoch hervor, dass der Schlauch einen Durchmesser aufweist, der über den gesamten Querschnitt eine konstante Dicke hat.

Aus dem Patent EP1786635B1 der Anmelderin sind Fahrradschläuche mit zwei Enden bekannt, die sich infolge der Verwendung von Materialien mit unterschiedlicher Elastizität nach Befüllen proportional gesehen mehr in Längsrichtung als im Querschnitt ausdehnen.

Gegenstand des Patentes EP2704909B1der Anmelderin ist schließlich ein Radschlauch zur vollständigen Bespannung auf eine Felge, welcher nicht in sich geschlossen ist, sondern zwei Enden aufweist, der Radschlauch umfassend:
- einen Schlauch mit zwei offenen Enden und zwei Endkappen, die jeweils eine abgerundete Wölbung aufweisen, die Wölbung einem stumpfen Schlauchende entspricht, das mit einer kreisförmigen Endplatte abgeschlossen ist, wobei die beiden Endkappen jeweils mit einem gesonderten Schlauchabschnitt durch Anvulkanisation verbunden sind und
- die Endkappen mit dem Schlauch Stoß an Stoß über den jeweiligen Schlauchabschnitt als verbindendes Element stoffschlüssig durch Vulkanisation verbunden sind.

### AUFGABE DER ERFINDUNG

Eine erste Aufgabe der vorliegenden Erfindung hat daher darin bestanden, die Beständigkeit, die Qualität und das Laufverhalten von Fahrrädern, die die genannten mit Endkappen verschlossenen Schläuche enthalten, zu verbessern. Hierunter ist zu verstehen, dass der Fahrer, der sein Fahrrad auf einer ebenen Strecke bewegt, kein Ruckeln wahrnimmt und die eingangs beschriebenen Beschädigungen des Schlauches ausbleiben.

Eine weitere zusätzliche Aufgabe ist darin zu sehen, die Schläuche so auszustatten, dass ein Verdrehen beim Einbau möglichst verhindert wird.

### BESCHREIBUNG DER ERFINDUNG

Ein erster Gegenstand der Erfindung betrifft einen Radschlauch nach Anspruch 1.

Die Erfindung geht mit der Erkenntnis einher, dass das unruhige Laufverhalten durch Unebenheiten beim Anstoßen der Endkappen in der Decke verursacht wird. Überraschenderweise wurde gefunden, dass dieses Problem zuverlässig gelöst werden kann, wenn man die Endkappen in ihrem unteren Bereich mit einer stärkeren Auflage versieht, beispielsweise dergestalt, dass der Wanddurchmesser gleichmäßig etwa 1 mm beträgt, jedoch im unteren Bereich der Kappe auf 1,2 bis 1,3 mm angehoben wird. Diese Maßnahme führt gleichzeitig dazu, dass der Schlauch vor Schäden durch Überdehnung geschützt wird.

Dementsprechend weisen die Endkappen (2) und der Schlauch (1) bezogen auf ihren Außenquerschnitt eine leicht ovale Form und bezogen auf ihren Innenquerschnitt eine runde oder annähernd runde Form auf. Stellt man auf den Außendurchmesser ab und betrachtet diesen wie das Zifferblatt einer Uhr, dann weist dieser in der 6-Uhr-Zeigerstellung eine etwa 5 bis etwa 20 % größere Wandstärke ("Auflage") als in der 3-, 9- und 12-Uhr-Zeigerstellung auf. Es versteht sich dabei von selbst, dass es sich dabei um keine diskreten Werte handelt, sondern dass sich die Wandstärke in Richtung auf die 6-Uhr-Position kontinuierlich erhöht. Die Endkappen können dabei eine Länge von etwa 5 bis etwa 10 cm und typisch etwa 7 bis 8 cm aufweisen. An der dünnsten Stelle weisen sie typisch eine Wandstärke von etwa 0,8 bis etwa 1,2 mm auf, die an ihrer dicksten Stelle bis auf etwa 1,0 bis 1,4 mm ansteigt, also beispielsweise von 1 mm auf 1,2 mm.

Es ist dabei bevorzugt, wenn mindestens eines der beiden Enden, insbesondere beide Enden in den Schlauch eingestülpt vorliegen; dieser Vorgang kann automatisiert mit entsprechenden Maschinen erfolgen. Auf diese Weise kann die Länge des Schlauches und damit die

Verpackung leicht um bis zu 50 % verkleinert werden. Beim Aufpumpen füllt sich der Schlauch mit Luft, wobei zunächst der innenliegende Schlauchteil von Luft umhüllt wird. Bei weiterer Druckerhöhung treibt die resultierende Kraft das eingestülpte Schlauchteil nach außen. Der Schlauch wird dabei zunächst länger, bis er an das andere Ende stößt, bevor er dann auch an Querschnittvolumen zunimmt und die Decke ganz ausfüllt.

Alternativ kann der Schlauch auch in einer Blasebalgform vorliegen, deren Aufpumpen dann ganz analog erfolgt.

Vorzugsweise zeichnet sich der Radschlauch dadurch aus,
- dass der Schlauch aus einem Hauptmaterial besteht.
- dass Teile des Schlauches andere elastische Eigenschaften als das Hauptmaterial aufweisen, und/oder
- dass der Schlauch sich nach Befüllen proportional gesehen mehr in Längsrichtung als im Querschnitt ausdehnt.

Der Schlauch verfügt natürlich auch über ein Luftbefüllungsventil, welches sich entweder mittig oder im Bereich der Endstücke befindet.

Um das Problem der falschen Montage zu beheben, wird ferner vorgeschlagen, dass der Schlauch eine untere und eine obere Seite aufweist, die in verschiedenen Farben ausgestaltet sind. Die unterschiedliche Färbung - die auch als einzelner Streifen ausgeprägt sein kann - führt dazu, dass beim Verdrehen die Linienführung unterbrochen wird. Dies ist dann ein optischer Warnhinweis, dass die Montage falsch durchgeführt wurde. Zusätzlich können auch die Schlauchende eingefärbt werden.

### VERFAHREN

Ein weiterer Gegenstand der Erfindung betrifft ein Verfahren nach Anspruch 12. Der Schritt der Bereitstellung zweier Endkappen 2A und 2B mit abgerundeter Wölbung kann dabei in einer Spritzgussform erfolgen, wobei die Endkappen sich einem Dorn mit entsprechender Wölbung befinden. Das hat den Vorteil, dass die Teile gleich die richtige Form erhalten und sich leicht ablösen lassen.

Die Erfindung wird durch die folgenden Abbildungen näher erläutert ohne dadurch auf diese Ausführungsformen eingeschränkt zu sein:

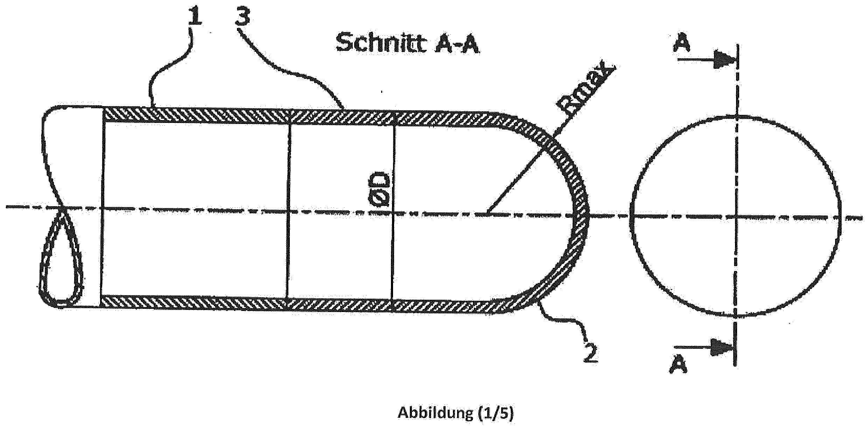

- **Abbildung 1** zeigt einen Schnitt durch das Ende eines konventionellen Schlauches und zeigt eine Endkappe (2), einen Schlauchabschnitt (3) sowie den eigentlichen Schlauch (1).
- **Abbildung 2** zeigt einen Schnitt durch einen Schlauch. Man erkennt den kreisrunden Innen- und Außenquerschnitt und den Sitz des Ventils.

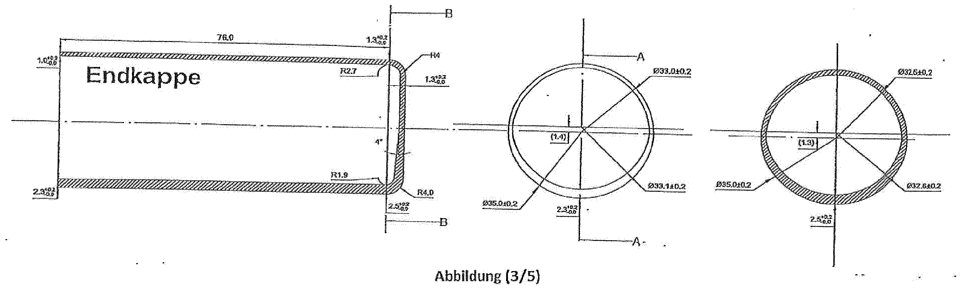

- **Abbildung 3** zeigt einen Schnitt durch eine Endkappe, man erkennt in 6-Uhr-Position die stärkere Auflage.
- **Abbildung 4** zeigt einen Schlauch, bei dem beide Enden eingestülpt sind; das Ventil ist mittig montiert.

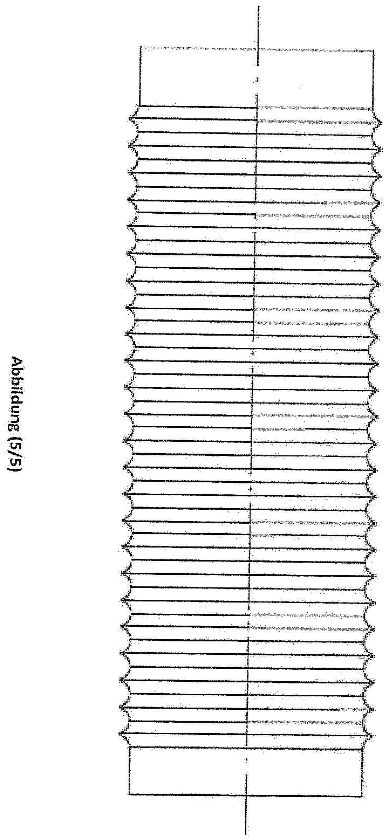

- **Abbildung 5** zeigt einen Schlauch in Blasebalgform.

## Patentansprüche

1. Radschlauch zur vollständigen Bespannung auf eine Felge, welcher nicht in sich geschlossen ist, sondern zwei Enden aufweist, der Radschlauch umfassend:
(i) einen Schlauch (1) mit zwei offenen Enden und zwei Endkappen (2), die jeweils eine abgerundete Wölbung aufweisen, die Wölbung einem stumpfen Schlauchende entspricht, das mit einer kreisförmigen Endplatte abgeschlossen ist, die zwei Endkappen (2) jeweils mit einem gesonderten Schlauchabschnitt (3) durch Anvulkanisation verbunden sind, wobei
(ii) die Endkappen (2) mit dem Schlauch (1) Stoß an Stoß über den jeweiligen Schlauchabschnitt (2) als verbindendes Element stoffschlüssig durch Vulkanisation verbunden sind,
**dadurch gekennzeichnet, dass**
(a) die beiden Endkappen (2) und/oder
(b) der Schlauch (1)
eine nicht-konstante Wandstärke aufweisen, so dass diese bezogen auf ihren Außenquerschnitt im aufgepumpten Zustand von der kreisrunden Form abweichen sowie der Außenquerschnitt der Endkappen (2) eine leicht ovale Form und der Innenquerschnitt eine runde Form aufweist.

2. Radschlauch nach Anspruch 1, **dadurch gekennzeichnet, dass** der Radschlauch aus einem Hauptmaterial besteht.

3. Radschlauch nach den Ansprüchen 1 und/oder 2, **dadurch gekennzeichnet, dass** Teile des Schlauches andere elastische Eigenschaften als das Hauptmaterial aufweisen.

4. Radschlauch nach mindestens einem der Ansprüche 1 bis 3, **dadurch gekennzeichnet, dass** der Schlauch sich nach Befüllen proportional gesehen mehr in Längsrichtung als im Querschnitt ausdehnt.

5. Radschlauch nach mindestens einem der Ansprüche 1 bis 4, **dadurch gekennzeichnet, dass** die Endkappen (2) bezogen auf den Außenquerschnitt in der 6-Uhr-Zeigerstellung eine etwa 5 bis etwa 20 % größere Wandstärke als in der 3-, 9- und 12-Uhr-Zeigerstellung aufweist.

6. Radschlauch nach mindestens einem der Ansprüche 1 bis 5, **dadurch gekennzeichnet, dass** die Endkappen eine Länge von etwa 5 bis etwa 10 cm aufweisen.

7. Radschlauch nach mindestens einem der Ansprüche 1 bis 6, **dadurch gekennzeichnet, dass** die Endkappen an ihrer dünnsten Stelle eine Wandstärke von etwa 0,8 bis etwa 1,2 mm und an ihrer dicksten Stelle von etwa 1,0 bis 1,4 mm aufweisen.

8. Radschlauch nach mindestens einem der Ansprüche 1 bis 7, **dadurch gekennzeichnet, dass** mindestens eines der beiden Enden in den Schlauch eingestülpt vorliegt.

9. Radschlauch nach mindestens einem der Ansprüche 1 bis 8, **dadurch gekennzeichnet, dass** der Schlauch im nicht-aufgepumpten Zustand eine Blasebalgform aufweist.

10. Radschlauch nach mindestens einem der Ansprüche 1 bis 9, **dadurch gekennzeichnet, dass** er ein Luftbefüllungsventil aufweist, welches sich entweder mittig oder im Bereich der Endstücke befindet.

11. Radschlauch nach mindestens einem der Ansprüche 1 bis 10, **dadurch gekennzeichnet, dass** er eine untere und eine obere Seite aufweist, die in verschiedenen Farben ausgestaltet sind.

12. Verfahren zur Herstellung eines Radschlauchs nach Anspruch 1, umfassend oder bestehend aus den folgenden Schritten:
(a) Bereitstellen zweier Endkappen (2A und 2B) mit abgerundeter Wölbung;
(b) Bereitstellung zweier unvulkanisierter oder teilvulkanisierter Schlauchabschnitte (3A und 3B),
(c) Anspritzen der beiden Endkappen (2) Stoß an Stoß an die beiden Schlauchabschnitte (3);
(d) Anvulkanisieren der Anspritzprodukte;
(e) Zusammenfügen der beiden mit den Endkappen versehenen Schlauchabschnitte (3) mit einem unvulkanisierten oder teilvulkanisierten Schlauch (1) durch Vulkanisation;
(f) Endvulkanisation des Produktes aus Schritt (e),
**dadurch gekennzeichnet, dass**
(i) die Endkappen (2) und/oder der Schlauch (1) eine nicht-konstante Wandstärke aufweisen, bei der bezogen auf deren Außenquerschnitt in der 6-Uhr-Zeigerstellung eine etwa 5 bis etwa 20 % größere Wandstärke als in der 3-, 9- und 12-Uhr-Zeigerstellung vorliegt und
(ii) wobei der Außenquerschnitt der Endkappen (2) eine leicht ovale Form und der Innenquerschnitt eine runde Form aufweist.

## Claims

1. Wheel tube for complete covering on a rim, which is not closed in itself but has two ends, the wheel tube comprising:
(i) a tube (1) having two open ends and two end caps (2) each having a rounded curvature, the curvature corresponding to a blunt tube end terminated with a circular end plate, the two end caps (2) each being connected to a separate tube section (3) by vulcanization, wherein
(ii) the end caps (2) are joined to the tube (1) butt to butt via the respective tube section (2) as a connecting element by vulcanization,
**characterized in that**
(a) the two end caps (2) and/or
(b) the tube (1)
have a non-constant wall thickness, so that they deviate from the circular shape in relation to their external cross section in the inflated state
and the outer cross-section of the end caps (2) has a slightly oval shape and the inner cross-section has a round shape.

2. wheel tube according to claim 1, **characterized in that** the wheel tube consists of a main material.

3. wheel tube according to claims 1 and/or 2, **characterized in that** parts of the tube have other elastic properties than the main material.

4. wheel tube according to at least one of claims 1 to 3, **characterized in that**, after filling, the tube expands proportionally more in the longitudinal direction than in the cross-section.

5. wheel tube according to at least one of claims 1 to 4, **characterized in that** the end caps (2) have a wall thickness which is about 5 to about 20 % greater in relation to the outer cross section in the 6 o'clock pointer position than in the 3-, 9- and 12-o'clock pointer positions.

6. Wheel tube according to at least one of claims 1 to 5, **characterized in that** the end caps have a length of about 5 to about 10 cm.

7. Wheel tube according to at least one of claims 1 to 6, **characterized in that** the end caps have a wall thickness of about 0.8 to about 1.2 mm at their thinnest point and of about 1.0 to 1.4 mm at their thickest point.

8. Wheel tube according to at least one of claims 1 to 7, **characterized in that** at least one of the two ends is folded into the tube.

9. Wheel tube according to at least one of claims 1 to 8, **characterized in that** the tube has a bellows shape in the non-inflated state.

10. Wheel tube according to at least one of claims 1 to 9, **characterized in that** it has an air filling valve which is located either centrally or in the region of the end pieces.

11. Wheel tube according to at least one of claims 1 to 10, **characterized in that** it has a lower and an upper side which are designed in different colors.

12. A method of manufacturing a wheel tube according to claim 1, comprising or consisting of the following steps:
(a) providing two end caps (2A and 2B) with rounded camber;
(b) providing two unvulcanized or partially vulcanized tube sections (3A and 3B),
(c) injection molding of the two end caps (2) butt to butt onto the two tube sections (3);
(d) vulcanizing the gated sections;
(e) joining the two tube sections (3) provided with the end caps with an vulcanized or partially vulcanized tube (1) by vulcanization;
(f) final vulcanization of the product of step (e),
**characterized in that**
(i) the end caps (2) and/or the tube (1) have a non-constant wall thickness in which, relative to their outer cross-section, there is a wall thickness which is about 5 to about 20% greater in the 6 o'clock tick position than in the 3-, 9- and 12-o'clock tick positions, and
(ii) wherein the outer cross-section of the end caps (2) has a slightly oval shape and the inner cross-section has a round shape.

## Revendications

1. Boyau de roue destiné à être complètement tendu sur une jante, qui n'est pas fermé sur lui-même, mais qui présente deux extrémités, le boyau de roue comprenant :
(i) un boyau (1) avec deux extrémités ouvertes et deux capuchons d'extrémité (2), qui présentent chacun une courbure arrondie, la courbure correspondant à une extrémité de tuyau émoussée, qui est fermée par une plaque d'extrémité circulaire, les deux capuchons d'extrémité (2) étant reliés chacun à une section de tuyau séparée (3) par vulcanisation, où
(ii) les capuchons d'extrémité (2) sont reliés par vulcanisation au boyau (1), bout à bout, par l'intermédiaire de la section de boyau respective (2) en tant qu'élément de liaison,
**caractérisé en ce que**
(a) les deux capuchons d'extrémité (2) et/ou
(b) le boyau (1)
présentent une épaisseur de paroi non constante, de sorte que ceux-ci s'écartent de la forme circulaire par rapport à leur section transversale extérieure à l'état gonflé,
ainsi que la section extérieure des embouts (2) présente une forme légèrement ovale et la section intérieure une forme ronde.

2. Boyau de roue selon la revendication 1, **caractérisée en ce que** le boyau est constituée d'un matériau principal.

3. Boyau de roue selon les revendications 1 et/ou 2, **caractérisée en ce que** des parties de boyau présentent des propriétés élastiques différentes de celles du matériau principal.

4. Boyau de roue selon au moins l'une des revendications 1 à 3, **caractérisée en ce que** le boyau se dilate proportionnellement plus dans la direction longitudinale que dans la section transversale après le gonflage.

5. Boyau de roue selon au moins l'une des revendications 1 à 4, **caractérisée en ce que** les embouts (2) présentent, par rapport à la section extérieure, une épaisseur de paroi supérieure d'environ 5 à environ 20 % dans la position de l'aiguille à 6 heures par rapport aux positions de l'aiguille à 3, 9 et 12 heures.

6. Boyau de roue selon au moins l'une des revendications 1 à 5, **caractérisée en ce que** les embouts ont une longueur d'environ 5 à environ 10 cm.

7. Boyau de roue selon au moins l'une des revendications 1 à 6, **caractérisé en ce que** les embouts ont une épaisseur de paroi d'environ 0,8 à environ 1,2 mm à leur partie la plus mince et d'environ 1,0 à 1,4 mm à leur partie la plus épaisse.

8. Boyau de roue selon au moins l'une des revendications 1 à 7, **caractérisée en ce qu'**au moins l'une des deux extrémités est retournée dans la chambre à air.

9. Boyau de roue selon au moins l'une des revendications 1 à 8, **caractérisée en ce que** le boyau présente une forme de soufflet à l'état non gonflé.

10. Boyau de roue selon au moins l'une des revendications 1 à 9, **caractérisée en ce qu'**elle comporte une valve de gonflage située soit au milieu, soit au niveau des embouts.

11. Boyau de roue selon au moins l'une des revendications 1 à 10, **caractérisée en ce qu'**elle présente un côté inférieur et un côté supérieur de couleurs différentes.

12. Procédé de fabrication d'un boyau de roue selon la revendication 1, comprenant ou consistant en les étapes suivantes :
(a) préparation de deux embouts (2A et 2B) à courbure arrondie ;
(b) fournir deux sections de boyau non vulcanisées ou partiellement vulcanisées (3A et 3B),
(c) injection des deux capuchons d'extrémité (2) bout à bout sur les deux sections de boyau (3) ;
(d) vulcanisation des produits injectés ;
(e) assemblage par vulcanisation des deux tronçons de boyau (3) munis des embouts avec un boyau (1) non vulcanisé ou partiellement vulcanisé ;
(f) vulcanisation finale du produit de l'étape (e),
**caractérisé en ce que**
(i) les capuchons d'extrémité (2) et/ou le boyau (1) présente une épaisseur de paroi non constante, dans laquelle, par rapport à leur section transversale extérieure, il existe dans la position de pointage à 6 heures une épaisseur de paroi supérieure d'environ 5 à environ 20 % à celle dans les positions de pointage à 3, 9 et 12 heures, et
(ii) la section extérieure des embouts (2) ayant une forme légèrement ovale et la section intérieure une forme arrondie.
